# EUROPÄISCHE PATENTSCHRIFT

(11) **EP 0 757 790 B1**
(45) Veröffentlichungstag und Bekanntmachung des Hinweises auf die Patenterteilung: **10.06.1998**
(21) Anmeldenummer: 95915111.9
(22) Anmeldetag: 06.03.1995
(51) Int. Cl.: G01N 23/223, G21K 1/06

(54) **VORRICHTUNG ZUR RÖNTGEN-, STOFF- UND STRUKTURANALYSE**
X-RAY DEVICE FOR ANALYSING SUBSTANCES AND STRUCTURES
DISPOSITIF D'ANALYSE DE MATERIAUX ET DE STRUCTURES PAR RAYONS X

(30) Priorität: 07.03.1994 DE 4408057
(43) Veröffentlichungstag der Anmeldung: 12.02.1997
(73) Patentinhaber: IFG INSTITUT FÜR GERÄTEBAU GmbH, 12489 Berlin (DE)
(72) Erfinder: LANGHOFF, Norbert, D-12526 Berlin (DE); KUMAKHOV, Muradin, Abubekirovich, Moskau (RU); GORNY, Hans-Eberhard, D-12435 Berlin (DE)
(74) Vertreter: Hengelhaupt, Jürgen, Dipl.-Ing.
(86) Internationale Anmeldenummer: DE9500329
(87) Internationale Veröffentlichungsnummer: WO9524638

(56) Entgegenhaltungen:
- EP-A- 0 318 012
- WO-A-92/08235

## Beschreibung

Die Erfindung betrifft eine Vorrichtung zur Röntgen-, Stoff- und Strukturanalyse, wobei die von einer Strahlungsquelle ausgesandte Primärstrahlung ein Meßobjekt zur Aussendung von Sekundärstrahlung anregt und diese Sekundärstrahlung von einem Empfänger erfaßt und nachfolgend ausgewertet wird.

Die Erfindung ist anwendbar beispielsweise auf den Gebieten der Meßtechnik, insbesondere der Prozeßmeßtechnik, der Materialdiagnostik und der Medizin.

Als neues Anwendungsgebiet erschlossen wird die kontinuierliche Schichtdickenmessung, die Kopplung der Röntgenfluoreszensspektroskopie mit der Mikroskopie, die Messung kosmischer Röntgenstrahlung sowie die neuartige Realisierung von Röntgenzeilenoptiken und Tomographen.

Die Anwendung von Röntgenstrahlung in der Stoff- und Strukturanalytik sowie in der medizinischen Diagnostik und Therapie hat eine lange Tradition. Fortschritte in der Anwendung und bei der spezifischen Gerätetechnik sind immer dann eingetreten, wenn Forschungs- und Entwicklungsergebnisse anderer Fachdisziplinen und Fachbereiche übertragen und angewandt werden konnten.

Es war beispielsweise eine langgehegte Hoffnung von Physikern und Ingenieuren, Bauelemente in die Hand zu bekommen, die eine analoge Beeinflussung von Röntgenstrahlung gestatten, wie dies im optischen Bereich durch die Verwendung von Glas für Linsen oder Lichtleiter möglich ist.

Die Entwicklung und Anwendung derartiger Optiken verlief jedoch bislang im wesentlichen im Rahmen militärischer Projekte. Eine zivile Nutzung und Anwendung ist bisher nicht bekannt.

Die klassische Röntgenfluoreszenzspektroskopie und die Elektronenenergieanalyse findet seit langem in der Materialanalyse Verwendung.
Technisch wird bei der Röntgenfluoreszenzspektroskopie so vorgegangen, daß die zu untersuchende Probe mit der polychromatischen Strahlung einer Röntgenröhre oder der monochromatischen Strahlung einer Nuklidquelle zur Aussendung der Fluoreszenzstrahlung angeregt wird. Die Röntgenfluoreszenzstrahlung entsteht, wenn durch Röntgenquanten Elektronen in den Atomen von den inneren Schalen auf weiter außen gelegene Schalen gehoben werden und zum Ersatz andere Schalen-Elektronen zurückfallen. Die Fluoreszenzanregung ist auch mit Gamma-Elektronen- oder Ionenstrahlen möglich. Die Sekundärstrahlung wird geeignet registriert und die Signale werden elektronisch weiter verarbeitet.
Jedes von einem Element emittierte Röntgenfluoreszenzspektrum besteht im Gegensatz zu dem linienreichen optischen Spektrum aus nur wenigen charakteristischen Linien, anhand derer es eindeutig identifiziert werden kann. Zur quantitativen Analyse wird neben der Energie auch die Intensität der emittierten Strahlung gemessen, denn diese ist proportional dem Gehalt des betreffenden Elements in der Probe, das heißt, dem Produkt aus Schichtdicke und Konzentration.
Somit ist die Röntgenfluoreszenzspektroskopie prinzipiell auch zur Bestimmung der Schichtdicke geeignet.

Nachteilig an den bisher bekannten Methoden und Röntgenfluoreszenzspektroskopiemeßeinrichtungen ist, daß sowohl die Strahlungsquelle als auch das Detektionssystem konstruktiv in unmittelbarer Nähe des Meßortes angeordnet sein müssen.
Die Größe dieser Baugruppen gestattete bisher keine Konstruktionslösungen, bei denen größere Verluste sowohl bei der Anregungs- als auch der Meßintensität vermieden werden können. Nachteilig ist ebenfalls die hieraus resultierende hohe notwendige Strahlungsintensität der Strahlungsquelle.

Mit der WO-A-9 208 235 werden Röntgenkapillaroptiken beschrieben, welche auch für die Röntgen-, Stoff-und Strukturquelle und Meßobjekt angeordenet werden.
In der EP-A-O 318012 wird ein Röntgenstrahlanalyzer beschrieben, bei welchen zwischen der Röntgenquelle und dem Probentisch ein Röntgenleiter angeordnet ist.

Der Erfindung liegt die Aufgabe zugrunde, eine Vorrichtung zur Röntgen-, Stoff- und Strukturanalyse zu schaffen, wobei die Strahlungsquelle und/oder das Detektionssystem nicht in unmittelbarer Nähe des Meßobjektes angeordnet sein müssen, Strahlungsquellen geringer Intensität verwendet werden können und mit einfachen und preiswerten Mitteln sowohl kontinuierliche als auch diskontinuierliche Messungen und Analysen durchgeführt werden können.

Es ist weiterhin Aufgabe der Erfindung, neue Anwendungsgebiete für Röntgenoptiken zu erschließen.

Diese Aufgabe wird erfindungsgemäß gelöst durch die Merkmale im kennzeichnenden Teil des Ansprüches 1 in Verbindung mit den Merkmalen im Oberbegriff.
Zweckmäßige Ausgestaltungen der Erfindung sind in den jeweiligen Unteransprüchen enthalten.

Der besondere Vorteil der Erfindung besteht darin, daß durch den Verlauf der von einer Strahlenquelle ausgesandten Strahlung durch ein Optikelement, in welchem die Strahlung parallelisiert und/oder fokusiert und/oder monochromatisiert wird und unmittelbar nach Verlassen des Optikelementes auf das Meßobjekt trifft, dort die Fluoreszenzstrahlung erzeugt und die Fluoreszenzstrahlung von in unmittelbarer Nähe zum Meßobjekt angeordneten Detektionssystemen empfangen wird, sowohl eine räumlich entfernte Anordnung der Strahlungsquelle vom Meßobjekt als auch die Verwendung von Strahlungsquellen mit geringer Strahlungsintensität ermöglicht wird.

Je nach Anwendungsfall kann die Primärstrahlung Röntgenstrahlung und die Sekundärstrahlung Fluoreszenzstrahlung sein oder aus Photoelektronen bestehen oder die Primärstrahlung aus Elektronen bestehen und die Sekundärstrahlung Röntgenstrahlung sein.

Durch die Ausbildung der Optikelemente aus anorganischen oder organischen Materialien oder einer Kombination daraus und die Gestaltung als eine Vielzahl sehr dünner, hohler Kapillaren, wobei die anorganischen Materialien beispielsweise Glas und/oder Keramik und/oder Matall und die organischen Materialien Polymere und/oder Polymergemische und/oder Komposite mit polymer Matrix sein können,, wird erreicht, daß die Röntgenphotonen an den Innenflächen der Kapillaren total reflektiert und durch eine vorherberechnete Krümmung der Kapillaren in eine erwünschte Richtung gelenkt werden. Die zulässigen Krümmungsradien und Kapillarendurchmesser hängen von der Energie der Röntgenphotonen und den optischen Forderungen generell ab.

Ein weiterer Vorteil der Erfindung besteht darin, daß die Analysen kontinuierlich oder diskontinuierlich erfolgen können, wobei das Meßobjekt entlang der Optikelemente oder die Optikelemente entlang dem Meßobjekt bewegt werden.

Ein einfacher Aufbau einer erfindungsgemäßen Vorrichtung, bestehend aus mindestens einer Strahlungsquelle zur Anregung und einem Detektor zum Empfang der Fluoreszenzstrahlung wird dadurch realisiert, daß zwischen Strahlungsquelle und Meßobjekt mindestens ein erstes Optikelement und in unmittelbarer Nähe zum Meßobjekt mindestens ein Detektor angeordnet wird.

Speziell für die kontinuierliche Messung der Schichtdicke während des Prozesses, beispielsweise der Beschichtung von Trägern mit Metallschichten zur Oberflächenvergütung, wie das Elektronenstrahl-Metallband-Bedampfen, das Vakuum-Bedampfen von Kunststoffolien oder die Spartabeschichtung von Flachglas wird ein kostengünstiger Aufbau einer Vorrichtung unter Verwendung einer luftgekühlten Kleinröntgenröhre dadurch realisiert, daß der Strahlungsausgang der Kleinröntgenröhre mit dem Strahlungseingang eines Optikelementes verbunden ist, wobei das Optikelement in einem inneren Gehäuse, welches an seiner Unterseite eine Öffnung und Detektoren aufweist, angeordnet ist, und das innere Gehäuse von einem äußeren Gehäuse umgeben ist, welches ebenfalls eine Öffnung aufweist.

Ein zusätzlicher Vorteil der Erfindung resultiert daraus, daß durch die Verwendung eines zwischen Strahlungsquelle und Meßobjekt angeordnetem Optikelement, bestehend beispielsweise aus einer Vielzahl sehr dünner, hohler Glaskapillaren, zur diskontinuierlichen Materialanalyse die Kopplung mit einem Lichtmikroskop ermöglicht wird. Dieses neue Anwendungsgebiet ist besonders für solche Proben geeignet, die sich bisher einer Präparation für die Untersuchung in Rasterelektronenmikroskopen entzogen.

Weitere neue Anwendungsgebiete der Erfindung resultieren aus der Verwendung der Optikelemente zur kontinuierlichen linienförmigen Durchstrahlung des zu untersuchenden Objektes und damit einer Zeilenoptik oder zur kontinuierlichen Durchstrahlung des zu untersuchenden Körpers unter gleichzeitiger Rotation von Strahlungsquelle, Optikelement und Empfänger als konstruktive Einheit, um das zu untersuchende Objekt sowie Verschiebung der gesamten konstruktiven Einheit in der Längsachse und damit Realisierung eines Tomographen.

Die Erfindung soll nachstehend anhand von Ausführungsbeispielen näher erläutert werden.

Es zeigt:

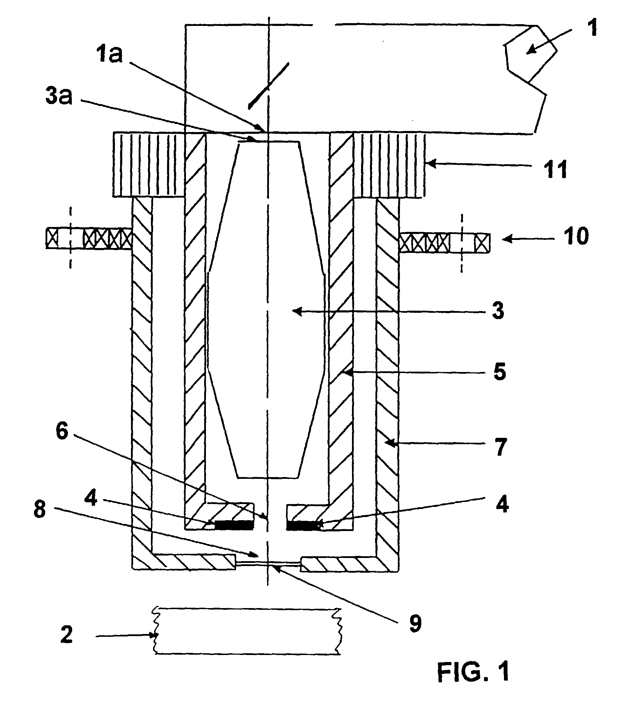

- Fig. 1: Eine erfindungsgemäße Vorrichtung zur kontinuierlichen zerstörungsfreien Messung der Schichtdicke während des Schichtherstellungsprozesses;

Der verfahrensmäßige Ablauf zur Röntgenfluoreszenzspektroskopie besteht dabei darin, daß die von einer Strahlungsquelle ausgesandte Strahlung ein Meßobjekt zur Aussendung der Fluoreszenzstrahlung anregt und diese Fluoreszenzstrahlung von einem Empfänger erfaßt und nachfolgend ausgewertet wird, wobei die von mindestens einer zum Meßobjekt entfernt angeordneten Strahlungsquelle ausgesandte Strahlung mindestens einem ersten Optikelement zugeführt wird, die Strahlung in dem Optikelement parallelisiert und/oder fokussiert und/oder monochromatisiert wird, die Strahlung unmittelbar nach Verlassen des Optikelementes auf das Meßobjekt trifft, dort die Fluoreszenzstrahlung erzeugt und die so erzeugte Fluoreszenzstrahlung von in unmittelbarer Nähe zum Meßobjekt angeordneten Detektoren empfangen wird.
Als Strahlungsquelle findet im vorliegenden Ausführungsbeispiel eine luftgekühlte Kleinleistungsröntgenröhre (1) Verwendung, deren Mikrofokus mit Hilfe des Optikelementes (3) auf das Meßobjekt (2) abgebildet wird. Das Optikelement (3) ist konstruktiv in einem als Kupferrohr ausgebildeten inneren Gehäuse (5) angeordnet, welches der Kühlung des Halbleiterdetektors (4) dient, der unmittelbar über dem Meßort angeordnet ist. Auf diese Weise kann ein großer Teil der in dem Meßobjekt (2) angeregten charakteristischen Strahlung vom Detektor (4) erfaßt werden. Für die Montage des Detektors (4) sind verschiedene konstruktive Lösungen möglich. Der Detektor (4) kann beispielsweise als Ringdetektor mit einer Innenbohrung ausgeführt sein. Ebenso ist ein konzentrischer Aufbau durch eine geeignete Zahl parallel betriebener Einzeldetektoren möglich, wobei der Anregungsstrahl durch eine zwischen den Einzeldetektoren gebildeten Öffnung verläuft. Weiterhin ist es auch möglich, daß anstelle des Halbleiterdetektors andere Detektoren (4) mit geeigneten physikalischen und technischen Parametern zum Einsatz kommen.

Um einen Einbau der kompakten Vorrichtung beispielsweise in Rezipienten vornehmen zu können, aber auch um eine Wärmeisolation zu gewährleisten, wird das wärmeleitende Rohr (5) in einem weiteren als Rohr ausgebildeten äußeren Gehäuse (7), das vom Kühlrohr (5) isoliert ist, eingebracht. Dieses größere Rohr (7) ist im Falle der Montage in einen Rezipienten mit einem Flansch (10) versehen. Die elektrischen Verbindungen werden innerhalb der Vorrichtung geführt.

Das Optikelement (3) besteht aus dünnen, hohlen Glaskapillaren, welche aus einem Spezialglas hergestellt wurden. Die einzelnen Glaskapillaren werden zu dem kompletten Optikelement (3) zusammengefügt. Hierdurch wird es möglich, divergente Röntgenstrahlen zu fokussieren, divergente Röntgenstrahlen in quasiparallele Röntgenstrahlen zu wandeln, die Strahlungsrichtung der Röntgenstrahlen zu ändern bzw. umzulenken und die Röntgenstrahlung zu filtern und zu monochromatisieren.

Das innere Gehäuse (5) weist eine Öffnung (6) auf, durch welche die aus dem Optikelement (3) austretende Strahlung verläuft. Im weiteren Verlauf passiert diese Strahlung auch die in dem äußeren Gehäuse (7) angeordnete Öffnung (8) mit dem Fenster (9). Das Fenster (9) ist im vorliegenden Ausführungsbeispiel aus Berillum ausgebildet, kann jedoch auch aus einer organischen Folie bestehen.

Die erzeugte Röntgenfluoreszenzstrahlung passiert ebenfalls die Öffnung (8) mit dem Fenster (9) und wird von den an der Außenfläche des inneren Gehäuses (5) angeordneten Detektoren (4) erfaßt und in einer nachgeschalteten, in der Figur nicht dargestellten Elektronikschaltung, ausgewertet und weiterverarbeitet.

An dem inneren Gehäuse (5) ist zur Kühlung eine Peltierbatterie (11) angeordnet.

Findet anstelle der Röntgenfluoreszenzspektroskopie die Elektronenenergieanalyse Anwendung, so werden die nach Strahlungsanregung über das Optikelement vom Meßobjekt ausgesandten Photoelektronen unterschiedlicher Energie von einem in unmittelbarar Nähe vom Meßobjekt angeordneten Analysator- und Detektionssystem empfangen.

So ist die beschriebene Konstruktion auch für eine Kopplung mit einem Lichtmikroskop geeignet. In diesem Falle wird die im Mikroskop betrachtete Probe an der für die Analyse gewünschten Stelle markiert und aus der Mikroskopstellung in die Analysenstellung transportiert. Die Kopplung eines Lichtmikroskops an einen Röntgenfluoreszenzanalytikteil erschließt insbesondere Applikationsfelder in der Medizin, Biologie, Umweltanalytik, Lebensmittelindustrie und in der pharmazeutischen Industrie. Eine derartige Kopplung ist besonders für solche Proben geeignet, die sich einer Präparation für die Untersuchung in Rasterelektronenmikroskopen entziehen.

Eine weitere mögliche Anwendung der Erfindung liegt in der Kopplung mit einem Elektronenmikroskop. Auch unter dem Aspekt der Weiterentwicklung von Röntgengeräten und der Verringerung der Belastung des Menschen durch die ionisierende Strahlung sowie die Verbesserung des Informationsgehaltes von Röntgenbildern ist die Erfindung von Bedeutung, indem durch den Einsatz von Röntgenoptiken beiden Forderungen in hervorragender Weise entsprochen wird. Durch die Realisierung einer Zeilenoptik unter Verwendung der beschriebenen optischen Elemente ist eine linienförmige parallele Durchstrahlung des Körpers und auf der Empfangsseite durch röntgenempfindliche Empfängerzeilen bzw. Matrizen der Nachweis der Strahlenschwächungswerte möglich.
Die Digitalisierung und Speicherung der in den einzelnen Pixel der Zeile empfangenen Werte gestattet nach einer schnittförmigen Abtastung des gesamten Untersuchungsobjektes eine 3-D-Rekonstruktion des Bildes im Computer.
Die Verfügbarkeit von speziellen Programmen zur Bildmanipulation gestattet eine Erhöhung der Kontraste, der Falschfarbenzuordnung, das heißt insgesamt eine erheblich verbesserte Bildauswertung. Die hohe Empfindlichkeit der Zeilen und die Verwendung der Röntgenoptiken gestatten, die Durchstrahlung mit geringen Intensitäten durchzuführen.

Durch Rotation von Strahlungsquelle, Optikelement und Empfänger als konstruktive Einheit um das Untersuchungsobjekt erhält man einen sehr einfachen, aber leistungsfähigen Tomographen, wobei bei dieser Arbeitsweise in der Längsachse des Untersuchungsobjektes eine Verschiebung der konstruktiven Einheit erfolgt und aus den einzelnen Schnitten die 3-dimensionale Rekonstruktion des Körpers ermöglicht wird.

Weiterhin kann die Erfindung zur dreidimensionalen Röntgenfluoreszenzanalyse und somit zerstörungsfreien Mikromaterialanalyse sowie zur Registrierung von kosmischer Röntgenstrahlung Verwendung finden.

## Patentansprüche

1. Vorrichtung zur Röntgen-, Stoff- und Strukturanalyse, bestehend aus mindestens einer Strahlungsquelle zur Aussendung von Primärstrahlung zur Anregung eines Meßobjektes und mindestens einem Detektor zum Empfang der Sekundärstrahlung, wobei zwischen Strahlungsquelle und Meßobjekt mindestens ein Optikelement angeordnet ist und der Strahlungsausgang der Strahlungsquelle mit dem Strahlungseingang des Optikelementes verbunden ist,
dadurch gekennzeichnet, daß
das Optikelement (3) in einem inneren Gehäuse (5) angeordnet ist, welches an seiner Unterseite eine Öffnung (6) zum Durchtritt der Primärstrahlung und mindestens einen Detektor (4) zum Empfang der Sekundärstrahlung aufweist und zum Austritt der Primärstrahlung und zum Eintritt der Sekundärstrahlung ein gemeinsames Fenster (9) angeordnet ist.

2. Vorrichtung nach Anspruch 1,
dadurch gekennzeichnet, daß
das innere Gehäuse (5) von einem äußeren Gehäuse (7) umgeben ist.

3. Vorrichtung nach Anspruch 1,
dadurch gekennzeichnet, daß
das Optikelement (3) aus anorganischen oder organischen Materialien oder einer Kombination daraus besteht und eine einzelne oder eine Vielzahl sehr dünner, hohler Kapillaren aufweist.

4. Vorrichtung nach einem der Ansprüche 1 oder 3,
dadurch gekennzeichnet, daß das
Optikelement (3) als Linse oder paralleles Bündel von Kapillaren ausgebildet ist.

5. Vorrichtung nach Anspruch 4,
dadurch gekennzeichnet, daß
die Linse eine Halblinse oder eine Vollinse ist.

6. Vorrichtung nach Anspruch 1,
dadurch gekennzeichnet, daß
die Strahlungsquelle (1) eine luftgekühlte Kleinleistungsröntgenröhre ist.

7. Vorrichtung nach Anspruch 1,
dadurch gekennzeichnet, daß
das Fenster (9) aus Beryllium oder einer Polymerfolie besteht.

8. Vorrichtung nach Anspruch 2,
dadurch gekennzeichnet, daß
das äußere Gehäuse (7) einen Flansch (10) aufweist und an dem inneren Gehäuse (5) ein Kühlkörper (11) angeordnet ist.

9. Vorrichtung nach Anspruch 8,
dadurch gekennzeichnet, daß
der Kühlkörper (11) eine Peltierbatterie ist.

10. Vorrichtung nach Anspruch 1 oder 2,
dadurch gekennzeichnet, daß
die Gehäuse (5 und 7) als Rohre ausgebildet sind, das Gehäuse (5) aus gut wärmeleitendem Metall besteht und die Gehäuse (5 und 7) thermisch voneinander isoliert sind.

11. Vorrichtung nach Anspruch 1,
dadurch gekennzeichnet, daß
der Detektor (4) als Ringdetektor mit Innenbohrung ausgebildet ist oder aus mehreren einzelnen Detektoren besteht, welche derart angeordnet sind, daß zwischen ihnen eine Öffnung für den Strahlendurchgang der Anregungsstrahlung gebildet wird.

12. Vorrichtung nach Anspruch 1 oder 6,
dadurch gekennzeichnet, daß
die Strahlungsqelle (1) mit dem Optikelement (3) mittels eines Flansches an der Wand eines Rezipienten befestigt ist und flexible Elemente zur Justage der Strahlungsquelle (1) in Bezug auf die Oberfläche des Meßobjektes (2) angeordnet sind.

13. Verwendung einer Vorrichtung nach mindestens einem der voranstehenden Ansprüche mit einem zwischen Strahlungsquelle und Meßobjekt angeordneten Optikelement, bestehend aus einer Vielzahl sehr dünner, hohler Kapillaren aus beispielsweise Glas und/oder Keramik und/oder Matall und/oder Polymeren und/oder Polymergemischen und/oder Kompositen mit polymerer Matrix zur Messung der Schichtdicke mittels Röntgenfluoreszenzspektroskopie.

14. Verwendung einer Vorrichtung nach mindestens einem der Ansprüche 1-12 mit einem zwischen Strahlungsquelle und Meßobjekt angeordneten Optikelement, bestehend aus einer Vielzahl sehr dünner, hohler Kapillaren aus beispielsweise Glas und/oder Keramik und/oder Matall und/oder Polymeren und/oder Polymergemischen und/oder Kompositen mit polymerer Matrix zur Materialanalyse in Kopplung mit einem Mikroskop.

15. Verwendung einer Vorrichtung nach mindestens einem der Ansprüche 1 - 12 mit einem zwischen Strahlungsquelle und Meßobjekt angeordneten Optikelement, bestehend aus einer Vielzahl sehr dünner, hohler Kapillaren aus beispielsweise Glas und/oder Keramik und/oder Matall und/oder Polymeren und/oder Polymergemischen und/oder Kompositen mit polymerer Matrix zur kontinuierlichen linienförmigen Durchstrahlung des zu untersuchenden Objektes bzw. Körpers und damit Realisierung einer Zeilenoptik.

16. Verwendung einer Vorrichtung nach mindestens einem der Ansprüche 1 - 12 mit einem zwischen Strahlungsquelle und Meßobjekt angeordneten Optikelement, bestehend aus einer Vielzahl sehr dünner, hohler Kapillaren aus beispielsweise Glas und/oder Keramik und/oder Matall und/oder Polymeren und/oder Polymergemischen und/oder Kompositen mit polymerer Matrix zur Durchstrahlung des zu untersuchenden Objektes unter gleichzeitiger Rotation von Strahlungsquelle, Optikelement und Empfänger als konstruktive Einheit, um das zu untersuchende Objekt sowie Verschiebung der gesamten konstruktiven Einheit in der Längsachse und damit Realisierung eines Tomographen.

17. Verwendung einer Vorrichtung nach Anspruch 15 oder 16,
dadurch gekennzeichnet, daß
eine Kreis - Zeilenoptik realisiert ist.

## Claims

1. Apparatus for X-ray, substance, and structure analysing, comprising at least one radiation source for emitting primary radiation in order to excite an object to be measured and at least one detector for receiving the secondary radiation, at least one optical element being arranged between radiation source and object to be measured and the radiation output of said radiation source being connected with the radiation input of said optical element,
characterised in that
the optical element (3) is arranged in an inner casing (5), which, on its underside, has an opening (6) for enabling passage of said primary radiation and at least one detector (4) for receiving said secondary radiation, and that a common window (9) is provided, enabling exit of said primary radiation and entry of said secondary radiation.

2. Apparatus according to Claim 1,
characterised in that
the inner casing (5) is surrounded by an outer casing (7).

3. Apparatus according to Claim 1,
characterised in that
the optical element (3) is made of inorganic or organic materials or of a combination thereof and has a single very thin, hollow capillary or a plurality of same.

4. Apparatus according to Claim 1 or 3,
characterised in that
the optical element (3) is designed as a lens or as a bundle of parallel capillaries.

5. Apparatus according to Claim 4,
characterised in that
the lens is a split lens or a full lens.

6. Apparatus according to Claim 1,
characterised in that
the radiation source (1) is an air-cooled low-power X-ray tube.

7. Apparatus according to Claim 1,
characterised in that
the window (9) is made of beryllium or a polymer foil.

8. Apparatus according to Claim 2,
characterised in that
the outer casing (7) has a flange (10) and that a heat sink (11) is provided on the inner casing (5).

9. Apparatus according to Claim 8,
characterised in that
the heat sink (11) is a Peltier battery.

10. Apparatus according to Claim 1 or 2,
characterised in that
the casings (5 and 7) are designed as tubes; that the casing (5) is made of metal of good heat conductivity, and that the casings (5 and 7) are thermally insulated from each other.

11. Apparatus according to Claim 1,
characterised in that
the detector (4) is designed as a ring detector having an internal bore or is made up of several individual detectors which are arranged such that an opening will be defined between them in order to enable passage of the exciting radiation.

12. Apparatus according to Claim 1,
characterised in that
the radiation source (1) is, with the optical element (3), fastened to the wall of a receptacle by means of a flange and that flexible elements are provided, serving for adjusting the radiation source (1) in respect of the surface of the object (2) to be measured.

13. Use of an apparatus according to at least one of the preceding claims and having an optical element arranged between radiation source and object to be measured, said element comprising a plurality of very thin, hollow capillaries of e. g. glass and/or ceramics and/or metal and/or polymers and/or polymer mixtures and/or composita having a polymer matrix for measuring the layer thickness by means of X-ray fluorescence spectroscopy.

14. Use of an apparatus according to at least one of Claims 1 to 12 and having an optical element arranged between radiation source and object to be measured, said element comprising a plurality of very thin, hollow capillaries of e. g. glass and/or ceramics and/or metal and/or polymers and/or polymer mixtures and/or composita having a polymer matrix for a material analysis, coupled with a microscope.

15. Use of an apparatus according to at least one of Claims 1 to 12 and having an optical element arranged between radiation source and object to be measured, said element comprising a plurality of very thin, hollow capillaries of e. g. glass and/or ceramics and/or metal and/or polymers and/or polymer mixtures and/or composita having a polymer matrix for continuous, linear irradiation of the object or body, resp, to be examined and, thus, realisation of a row optic.

16. Use of an apparatus according to at least one of Claims 1 to 12 and having an optical element arranged between radiation source and object to be measured, said element comprising a plurality of very thin, hollow capillaries of e. g. glass and/or ceramics and/or metal and/or polymers and/or polymer mixtures and/or composita having a polymer matrix for irradiation of the object to be examined under simultaneous rotation of radiation source, optical element, and receiver as structural unit around the object to be examined as well as shifting of the entire structural unit along the longitudinal axis and, thus, realisation of a tomograph.

17. Use of an apparatus according to Claim 15 or 16,
characterised in that
a concentric row optic is realised.

## Revendications

1. Appareil pour effectuer l'analyse à rayons X ainsi que celles de substance et de structure, comprenant au moins une source du rayonnement pour darder de la radiation primaire afin qu'un objet de mesure soit excité et au moins un détecteur pour recevoir la radiation secondaire, au moins un élément optique étant arrangé entre la source du rayonnement et l'objet de mesure et la sortie de rayonnement de la source du rayonnement étant reliée avec l'entrée de rayonnement d'élément optique,
caractérisé en ce que
l'élément (3) optique est arrangé dans une monture (5) intérieure qui, sur sa face inférieure, présente une ouverture (6) pour permettre le passage de la radiation primaire et au moins un détecteur (4) pour recevoir la radiation secondaire et qu'une fenêtre (9) commune est prévue, permettant la sortie de la radiation primaire et l'entrée de la radiation secondaire.

2. Appareil selon Revendication 1,
caractérisé en ce que
la monture (5) intérieure est entourée d'une monture (7) extérieure.

3. Appareil selon Revendication 1,
caractérisé en ce que
l'élément (3) optique se compose des matériaux inorganiques ou organiques ou d'une combinaison de ceux-ci et présente un très mince tube capillaire creux dépareillé ou une pluralité de très minces tubes capillaires creux.

4. Appareil selon Revendication 1 ou 3,
caractérisé en ce que
l'élément (3) optique est façonné comme une lentille ou un faisceau de tubes capillaires parallèles.

5. Appareil selon Revendication 4,
caractérisé en ce que
la lentille est une lentille fendue ou une lentille pleine.

6. Appareil selon Revendication 1,
caractérisé en ce que
la source (1) du rayonnement est un tube radiogène de basse capacité, refroidi par air.

7. Appareil selon Revendication 1,
caractérisé en ce que
la fenêtre (9) consiste en béryllium ou une feuille au polymère.

8. Appareil selon Revendication 2,
caractérisé en ce que
la monture (7) extérieure présente une bride (10) et qu'un dissipateur (11) de chaleur est prévu sur la monture (5) intérieure.

9. Appareil selon Revendication 8,
caractérisé en ce que
le dissipateur (11) de chaleur est une batterie Peltier.

10. Appareil selon Revendication 1 ou 2,
caractérisé en ce que
les montures (5 et 7) sont façonnées comme des tuyaux; que la monture (5) consiste en un métal bon conducteur à la chaleur et que les montures (5 et 7) sont isolées l'une de l'autre de manière thermique.

11. Appareil selon Revendication 1,
caractérisé en ce que
le détecteur (4) est façonné comme un détecteur annulaire ayant un alésage intérieur ou consiste en plusieurs détecteurs dépareillés et arrangés de telle manière qu'une ouverture sera définie entre eux pour permettre le passage de la radiation d'excitation.

12. Appareil selon Revendication 1 ou 6,
caractérisé en ce que
la source (1) du rayonnement est, avec l'élément (3) optique, attachée à la paroi d'un récipient au moyen d'une bride et que des éléments flexibles sont prévus, servant au ajustage de la source (1) du rayonnement par rapport à la surface d'objet (2) de mesure.

13. L'utilisation d'un appareil selon au moins une des revendications précédentes et ayant un élément optique arrangé entre la source du rayonnement et l'objet de mesure, ledit élément comprenant une pluralité de très minces tubes capillaires creux en, par exemple, verre et/ou céramique et/ou métal et/ou polymères et/ou mélanges de polymères et/ou composita ayant une matrice polymère pour mesurer l'épaisseur de la couche au moyen de la spectroscopie en fluorescence à rayons X.

14. L'utilisation d'un appareil selon au moins une des Revendications 1 à 12 et ayant un élément optique arrangé entre la source du rayonnement et l'objet de mesure, ledit élément comprenant une pluralité de très minces tubes capillaires creux en, par exemple, verre et/ou céramique et/ou métal et/ou polymères et/ou mélanges de polymères et/ou composita ayant une matrice polymère pour l'analyse de matériel, à accouplement d'un microscope.

15. L'utilisation d'un appareil selon au-moins une des Revendications 1 à 12 et ayant un élément optique arrangé entre la source du rayonnement et l'objet de mesure, ledit élément comprenant une pluralité de très minces tubes capillaires creux en, par exemple, verre et/ou céramique et/ou métal et/ou polymères et/ou mélanges de polymères et/ou composita ayant une matrice polymère pour l'irradiation continue linéaire d'objet respectivement du corps à examiner et, par conséquent, réalisation d'une optique de ligne.

16. L'utilisation d'un appareil selon au moins une des Revendications 1 à 12 et ayant un élément optique arrangé entre la source du rayonnement et l'objet de mesure, ledit élément comprenant une pluralité de très minces tubes capillaires creux en, par exemple, verre et/ou céramique et/ou métal et/ou polymères et/ou mélanges de polymères et/ou composita ayant une matrice polymère pour l'irradiation d'objet à examiner sous rotation simultanée de la source du rayonnement, d'élément optique et du récepteur comme unité constructive autour l'objet à examiner ainsi que déplacement de l'unité constructive entière suivant l'axe longitudinal et, par conséquent, réalisation d'un tomographe.

17. L'utilisation d'un appareil selon Revendication 15 ou 16,
caractérisé en ce qu'
une optique de ligne concentrique est réalisée.
